## Europäisches Patentamt

### European Patent Office

### Office européen des brevets

(11) Numéro de publication: **0 087 992**
**B1**

## FASCICULE DE BREVET EUROPEEN

(51) Int. Cl.⁴: **H 04 N 5/238**, G 02 F 1/17

(45) Date de publication du fascicule du brevet:
**16.10.85**

(21) Numéro de dépôt: **83400273.5**

(22) Date de dépôt: **08.02.83**

(54) **Appareil détecteur d'images vidéofréquence à correction automatique de sensibilité, utilisable sur un autodirecteur télévision.**

(30) Priorité: **23.02.82 FR 8202953**

(43) Date de publication de la demande:
**07.09.83 Bulletin 83/36**

(45) Mention de la délivrance du brevet:
**16.10.85 Bulletin 85/42**

(84) Etats contractants désignés:
**DE GB IT SE**

(56) Documents cités:
**EP - A - 0 032 334**
**FR - A - 1 228 105**
**FR - A - 1 511 769**
**US - A - 3 576 393**

**FERROELECTRICS, vol. 10, 1976, pages 201-205, Londres GB; W.E. PERRY et al.: "Television applications of plzt ceramics"**

(73) Titulaire: **THOMSON-CSF, 173, Boulevard Haussmann, F-75379 Paris Cedex 08 (FR)**

(72) Inventeur: **Pepin, Christian, THOMSON-CSF SCPI 173, bld Haussmann, F-75379 Paris Cedex 08 (FR)**
Inventeur: **Grancoin, Bernard, THOMSON-CSF SCPI 173, bld Haussmann, F-75379 Paris Cedex 08 (FR)**
Inventeur: **Meyzonnette, Jean-Louis, THOMSON-CSF SCPI 173, bld Haussmann, F-75379 Paris Cedex 08 (FR)**

(74) Mandataire: **Trocellier, Roger et al, THOMSON-CSF SCPI 173, Bld Haussmann, F-75379 Paris Cedex 08 (FR)**

ACTORUM AG

## Description

La présente invention concerne des aménagements à des appareils détecteurs d'images vidéofréquence dans lesquels l'image de la scène observée est formée par une optique réceptrice sur la surface photosensible d'un dispositif détecteur et qui comportent des moyens de correction automatique de la sensibilité.

De manière plus précise, l'invention s'adresse à de tels appareils où le dispositif détecteur est constitué par un circuit solide du genre dispositif à transfert de charge (DTC en abrégé), ou encore par un tube de prise de vue dont la cible est à base de silicium.

Ces détecteurs présentent un inconvénient majeur; leur sensibilité reste constante mais dans une plage beaucoup trop limitée. Ainsi, pour un éclairement moyen de scène variant de 100 à 100 000 lux, la dynamique utile devrait varier de 1 à 1000. Un senseur au silicium présente une dynamique utile de l'ordre de 1 à 10, soit 20 dB environ où la réponse est linéaire avec un rapport signal à bruit exploitable. Ensuite, pour tout éclairement plus important, le dispositif détecteur devient saturé. En outre, il n'est pas possible de remédier directement à cet état de chose par l'action d'une commande électronique au niveau du détecteur lui-même.

Cette restriction à la bonne marche de l'appareil s'avère très gênante pour la plupart des applications. C'est le cas notamment pour l'utilisation particulière envisagée selon la présente invention à un engin autodirecteur télévision où le détecteur et l'optique sont gyrostabilisés.

Pour y remédier, diverses solutions ont été mises en œuvre afin d'atténuer la lumière reçue et réguler ainsi la valeur moyenne vidéo à la valeur nominale prévue pour l'exploitation. L'une de ces solutions se trouve décrite dans le brevet européen N° 32334; elle comporte une boucle d'asservissement du signal vidéo par variation de la durée d'intégration des électrons dans la zone image d'un senseur DTC à transfert de trame, et un dispositif atténuateur optique pour obturer cette zone durant chaque intervalle de transfert en mémoire des charges collectées. L'atténuateur comporte un disque fixe et un disque mobile asservi en rotation. Ce dispositif permet d'agir automatiquement sur la sensibilité d'une caméra solide à condition qu'elle soit du type à transfert de charge.

Une autre solution consiste à utiliser un diaphragme à pales commandé par la boucle d'asservissement. Un montage de ce genre est décrit dans le brevet français N° 2446468. Le diaphragme est entraîné en rotation autour de l'axe optique pour déplacer les pales sous l'action de la force centrifuge. La vitesse de rotation est contrôlée par une boucle pour réguler le niveau vidéo moyen. Le dispositif permet de stabiliser le flux lumineux moyen détecté par le senseur DTC.

Les solutions précitées présentent des inconvénients dus essentiellement au volume, à la complexité et au coût qui sont trop élevés. De plus, elles nécessitent des pièces mobiles ce qui peut entraîner un déséquilibre du gyroscope dans une version autodirecteur, et l'accroissement de dynamique reste encore insuffisant.

Un objet de la présente invention est de remédier à ces divers inconvénients en utilisant comme atténuateur optique variable pour corriger automatiquement la sensibilité de l'appareil, une cellule à l'électrolyte dont le principe est bien connu pour l'affichage. L'atténuateur se trouve ainsi constitué par un moyen statique, de faibles encombrement et poids, ce qui présente d'indéniables avantages lorsqu'on désire l'incorporer dans une version gyrostabilisée.

Selon une caractéristique de la présente invention il est réalisé un appareil détecteur d'images vidéofréquence comportant une optique réceptrice pour former l'image de la scène observée sur le plan photosensible d'un détecteur d'images, et des moyens d'atténuation optique variable à commande électronique reliés par une boucle d'asservissement à la sortie vidéo pour réguler le signal vidéo en fonction de l'éclairement de scène et accroître la dynamique de fonctionnement de l'appareil, caractérisé en ce que les moyens d'atténuation optique sont formés par l'interposition sur le trajet optique d'au moins une cellule avec un électrolyte contenant des ions métalliques, l'électrolyte étant intercalé entre deux parois revêtues d'électrodes reliées à des moyens d'alimentation électrique pour produire par réaction électrochimique, le dépôt ou la dissolution selon le sens du courant d'alimentation, d'une couche métallique dont les propriétés optiques de réflexion et de transmission varient en fonction de l'épaisseur du dépôt, ces propriétés optiques étant utilisées pour produire ladite atténuation variable, les moyens d'alimentation électrique étant constitués par ladite boucle d'asservissement, et en ce que l'optique réceptrice (1), les moyens d'atténuation optique (4) et le détecteur (2) sont supportés par un montage gyroscopique (41 à 45) pour stabiliser l'axe optique (Z) de réception.

Les particularités de l'invention apparaîtront dans la description qui suit donnée à titre d'exemple non limitatif à l'aide des figures annexées qui représentent:

la fig. 1, un bloc-diagramme général d'un appareil détecteur d'images vidéofréquence conforme à la présente invention;

la fig. 2, un schéma d'une cellule à électrolyte utilisée à la transmission;

la fig. 3, un schéma d'une cellule à électrolyte utilisée à la réflexion;

la fig. 4, un schéma partiel relatif à une variante de réalisation de l'appareil utilisant une optique du genre Cassegrain;

la fig. 5, une variante de réalisation de la cellule atténuatrice par transmission selon la fig. 2;

la fig. 6, un schéma simplifié d'un appareil selon l'invention utilisé dans une version gyrostabilisée;

la fig. 7, un premier mode de réalisation selon la fig. 6 dans lequel la cellule est utilisée en transmission;

la fig. 8, un deuxième mode de réalisation selon lequel la cellule à électrolyte est utilisée en réflexion, et

la fig. 9, un mode de réalisation de la cellule à électrolyte utilisée dans le montage selon la fig. 8.

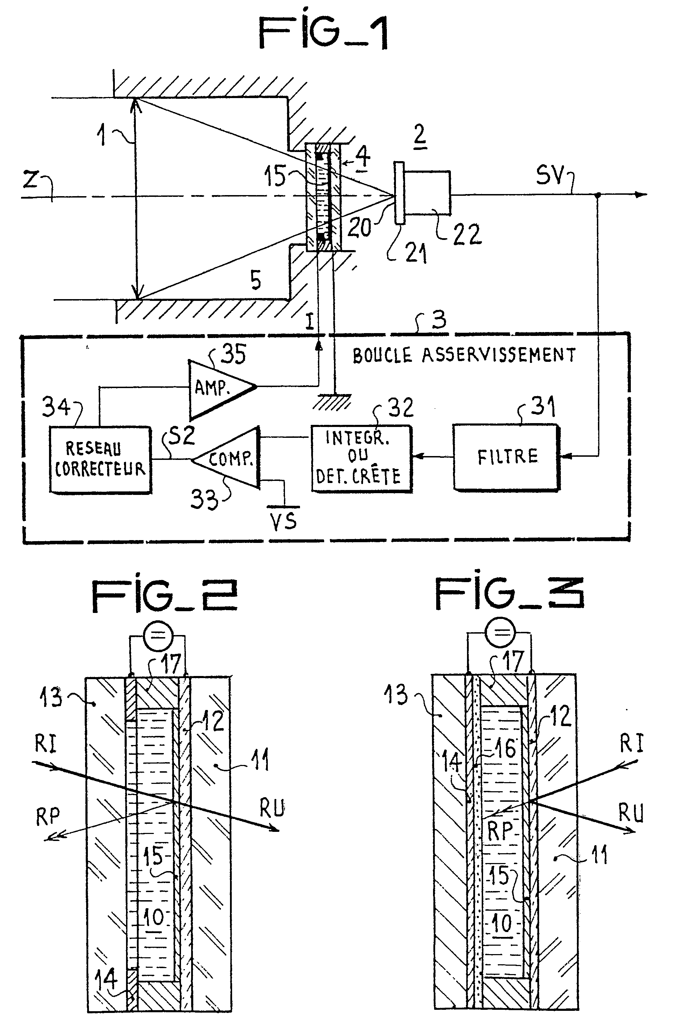

En se reportant à la fig. 1, l'appareil détecteur d'images vidéofréquence comporte une optique réceptrice 1 symbolisée par une lentille, et un dispositif détecteur 2. L'axe Z représente l'axe optique, ou axe de visée de l'appareil, qui aboutit au centre de la surface photosensible 20 du détecteur. L'optique 1 forme l'image du champ observé au niveau de la surface photosensible 20. Le plus souvent la visée s'effectue à l'infini et la surface 20 se trouve située dans le plan focal. Le détecteur 2 peut consister en un détecteur solide DTC en 21 composé des éléments détecteurs et des circuits intégrés de préamplification, et d'un dispositif de refroidissement 22, par exemple un cryostat à effet Peltier ou autre. Le montage comporte également une boucle 3 destinée à asservir le signal vidéo en fonction des fluctuations de luminosité de la scène observée pour fonctionner dans une plage lumineuse importante et conférer à l'appareil une grande dynamique. Cette boucle agit sur un des moyens d'atténuation optique 4 qui comporte au moins une cellule à électrolyte. La boucle fournit une alimentation continue contrôlée de la cellule pour faire varier ses propriétés optiques de transparence ou de réflexion, selon le cas. L'élément 5 symbolise la structure support de l'ensemble et notamment de l'ensemble optique-atténuateur et détecteur. L'atténuateur se trouve avantageusement disposé sur le trajet optique entre l'optique réceptrice 1 et la surface photosensible en sorte de pouvoir être réalisé sous de faibles dimensions.

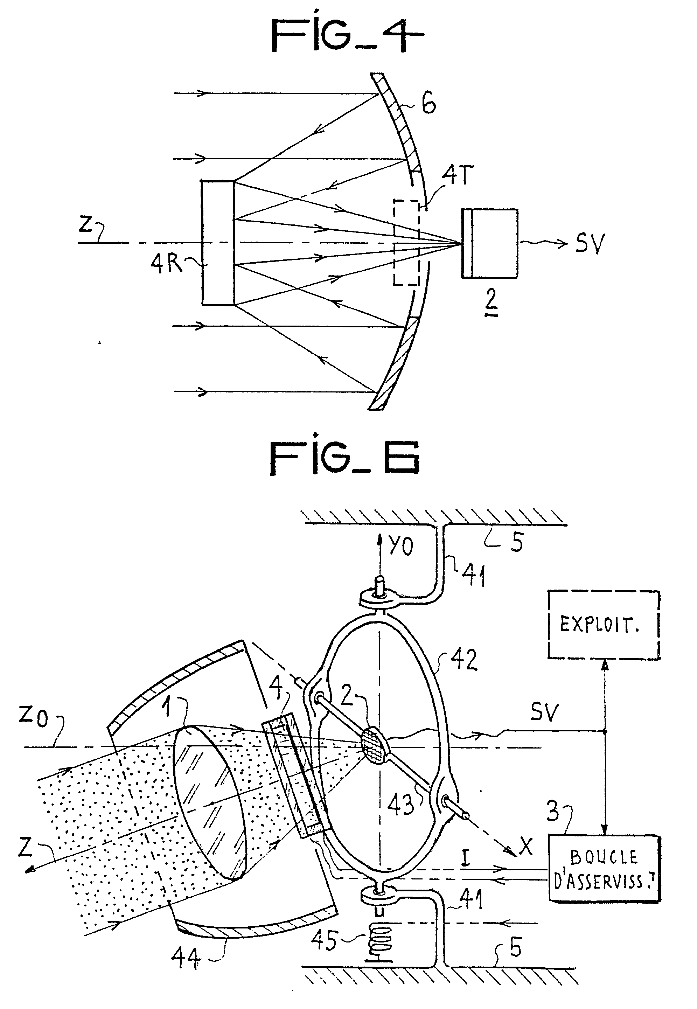

La structure d'une cellule à électrolyte va maintenant être rappelée à l'aide de la fig. 2 ou de la fig. 3. La cellule est constituée donc par un électrolyte 10 contenant des ions métalliques, intercalé entre une première paroi 11 revêtue d'une première couche conductrice transparente 12 formant électrode et une seconde paroi 13 revêtue d'une seconde couche conductrice 14 formant contre-électrode. Des moyens d'alimentation électrique en courant continu sont connectés aux bornes des électrodes 12 et 14 pour provoquer le dépôt ou la dissolution, par réaction électrochimique à partir des ions, d'une couche métallique 15 sur l'électrode transparente 12. La version de la fig. 3 est souvent utilisée de manière connue pour l'affichage, l'œil et la source lumineuse étant d'un même côté et la visualisation s'effectuant par réflexion; pour ne faire apparaître le dépôt métallique que dans les zones utiles d'affichage la structure connue comporte, en outre, des dépôts isolants sur les zones restantes de l'électrode transparente 12; un dispositif d'affichage électrolytique de ce genre est décrit notamment dans le brevet français N° 2352361. Pour un sens donné de branchement de la source continue, les ions métalliques, par exemple de l'argent, contenus dans l'électrolyte vont se déposer sur l'électrode transparente 12 qui peut être à base d'oxyde d'étain ou d'indium. Par contre, si le branchement est inversé, la couche métallique 15 se dissout et le métal se dépose sur la contre-électrode 14.

La version fig. 2 est relative à une utilisation par transmission. Pour ce faire, on a tout d'abord donné à la contre-électrode 14 une forme annulaire de manière à laisser passer à travers la quasi-totalité de la paroi transparente 13 le flux lumineux incident dont un rayon RI est représenté. La seconde paroi 11 est également transparente. Le rayon RI va traverser la cellule et va donner le rayon utile RU en sortie par transmission. Une partie de l'énergie lumineuse est perdue par absorption et réflexion lors de la traversée du dispositif, en particulier le rayonnement RP réfléchi par le dépôt métallique 15. On se rend bien compte que plus le dépôt 15 est épais moins il y a de lumière qui traverse le dispositif, et inversement. On obtient bien un fonctionnement en atténuateur optique variable par transmission.

Dans la représentation fig. 3 l'utilisation de la cellule s'effectue par réflexion; le rayonnement incident RI est réfléchi par le dépôt métallique 15 pour fournir le rayonnement utile RU alors qu'une partie de ce rayonnement traverse ce dépôt 15 de faible épaisseur, il s'agit du rayonnement RP qui se dirige vers le fond de la cellule. La paroi 11 est transparente et la paroi 13 est de préférence opaque. Pour améliorer le fonctionnement, il est connu d'incorporer au montage une couche absorbante 16 entre l'électrolyte et la contre-électrode 14 en sorte d'absorber le plus possible le rayonnement parasite RP qui a traversé le dépôt 15 et éviter un renvoi de rayonnement. L'épaisseur de la couche 15 fait varier la proportion RP du rayonnement incident RI qui traverse cette couche et donc corrélativement la proportion du rayonnement utile RU réfléchi en sortie vers le détecteur.

La fig. 4 montre, selon un schéma partiel, une réalisation dans laquelle la cellule est utilisée à la réflexion. Il s'agit d'un appareil qui comporte une optique réceptrice du type Cassegrain avec un miroir principal 6, le miroir secondaire étant constitué au moyen de la cellule 4R utilisée en réflexion (fig. 3).

L'utilisation de plusieurs cellules en cascade peut évidemment être envisagée si cela est nécessaire pour accroître encore le coefficient d'atténuation. On peut également envisager d'utiliser l'un ou l'autre type de cellules dans un même montage. A titre indicatif, sur le montage fig. 4 on a représenté en pointillé une deuxième cellule 4T qui peut être interposée sur le trajet final aboutissant au détecteur 2 et accroître l'efficacité donnée par la première cellule 4R; la cellule 4T est du type de la fig. 2, fonctionnant par transmission variable.

La boucle d'asservissement 3 qui assure la commande électrique de la cuve de la cellule 4, peut comporter les éléments représentés sur la fig. 1. Le signal vidéofréquence SV issu du dispositif détecteur 2 est d'abord appliqué à un filtre 31 destiné à supprimer le bruit haute fréquence. Ce filtre est suivi d'un circuit intégrateur ou d'un circuit détecteur crête 32. Dans le cas d'un intégrateur, le filtre 31 est du type passe-bas et le circuit permet de réguler l'éclairement à l'entrée du détecteur en fonction de l'éclairement moyen dans l'image. L'intégrateur a une constante de temps qui couvre une ou plusieurs trames. Dans le cas d'un détecteur crête, le filtre est du type passe-bande et on régule l'éclairement du détecteur en fonction du niveau crête de celui de la scène. Le signal ainsi traité est appliqué à un comparateur différentiel 33 où il est comparé à une tension de seuil ou tension de référence VS qui correspond à un niveau d'éclairement (moyen ou crête) déterminé que l'on désire obtenir pour le dispositif. Le signal d'erreur S2 en sortie du comparateur 33 est amplifié par un amplificateur 35 qui alimente la cellule avec un courant continu 1 proportionnel à l'erreur S2, en amplitude et en signe. Un réseau correcteur 34 est interposé entre la sortie S2 du comparateur 33 et l'amplificateur 35 pour assurer la stabilité de la boucle en compensant l'effet intégrateur de la cellule et en corrigeant les non-linéarités de la fonction de transfert de la cellule. Ce réseau peut être du type à avance de phase par exemple. Dans la version par transmission représentée sur la fig. 1 la densité optique D de la cuve est fonction de l'intégrale du courant 1 qui la traverse, la transparence T de la cuve est alors sensiblement une fonction exponentielle de la densité, donnée par $T = 10^{-D}$. Le réseau correcteur est déterminé pour compenser ces non-linéarités.

Dans la version réfléchissante de la cellule (fig. 3) la commande électrique de la cuve destinée à réguler le niveau d'éclairement sur la face sensible 20 du détecteur peut s'effectuer à l'aide d'un circuit similaire à celui de la fig. 1. Il y a lieu de noter deux différences. La première est qu'il faut inverser le sens du courant de commande de la cuve car plus le courant passe moins le dispositif atténue, la seconde est que la loi de correction pour linéariser le gain de boucle n'est plus la même. L'épaisseur du dépôt métallique est toujours proportionnelle à l'intégrale du courant ayant traversé la cuve, et la fonction de transfert de la cuve vaut en première approximation $R = 1 - (10)^{-D}$, où R représente le coefficient de réflexion. C'est cette loi qui est corrigée par le réseau correcteur.

La fig. 5 représente une variante de réalisation d'une cellule fonctionnant par transmission décrite à l'aide de la fig. 2. Cette variante revient en fait à constituer deux cellules formant atténuateur à transparence variable. Comme on peut le voir la structure est symétrique par rapport à la contre-électrode annulaire 14 avec deux électrodes 12A et 12B sur lesquelles les dépôts métalliques correspondants 15A et 15B viennent se former ou se dissolvent selon le sens du courant d'alimentation. Chacun de ces dépôts participe à un taux de réflexion du rayonnement incident RI. Les deux réflexions RPA et RPB agissent pour faire varier le taux de l'énergie lumineuse transmise, ce taux étant évidemment fonction de l'épaisseur des dépôts métalliques 15A et 15B.

La fig. 6 est un schéma simplifié d'un appareil de détection d'images vidéofréquence selon l'invention monté selon une utilisation plus particulièrement envisagée sur une suspension gyrostabilisée. Le système optique récepteur 1, le dispositif détecteur 2 et le dispositif atténuateur variable 4 sont suspendus à la cardan selon un montage gyroscope libre représenté à toupie extérieure. La suspension à deux degrés de liberté est identifiable par un premier cadre 41 solidaire du bâti ou corps extérieur 5, une partie centrale 42 figurée sous forme d'un anneau et pouvant tourner autour de l'axe de référence YO et un deuxième cadre 43 pouvant tourner autour d'un axe X perpendiculaire à YO et à l'axe optique Z ou axe de gyroscope. La toupie 44 ou masse gyroscopique est entraînée en rotation autour de l'axe Z et le montage gyroscopique stabilise cette direction dans l'espace lorsque l'axe de référence ZO lié à la structure portante, tel l'axe longitudinal d'un missile, s'écarte de la direction Z. La toupie comporte un rotor 44 et des bobinages statoriques 45 alimentés à partir d'un circuit non figuré.

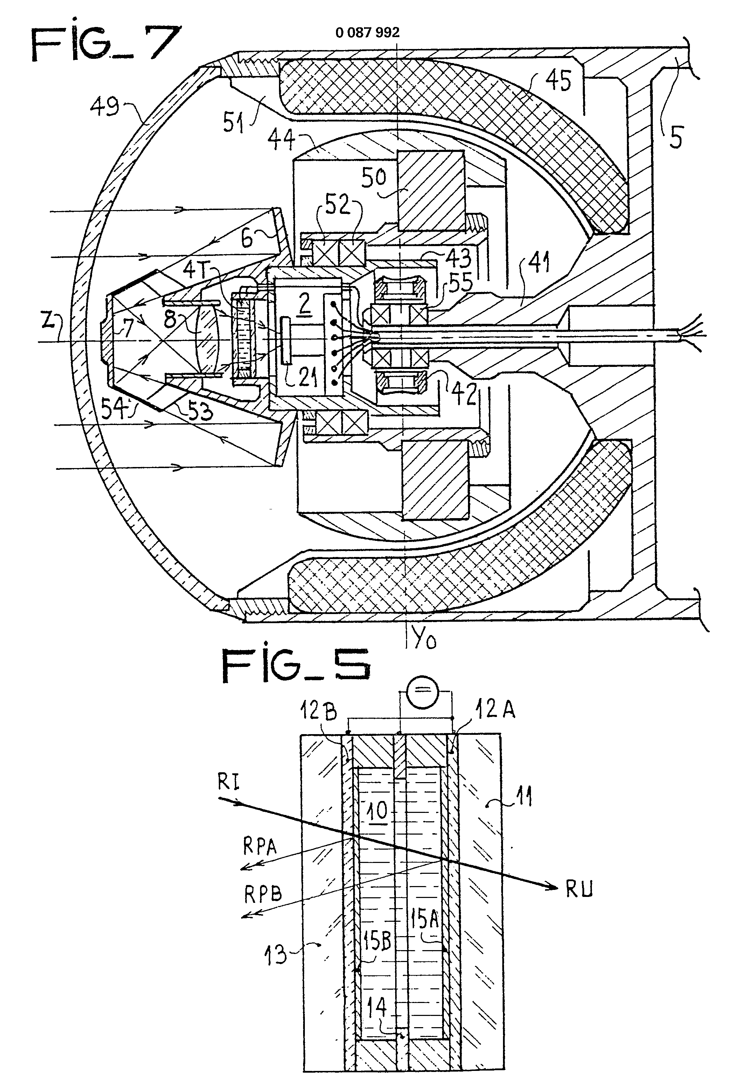

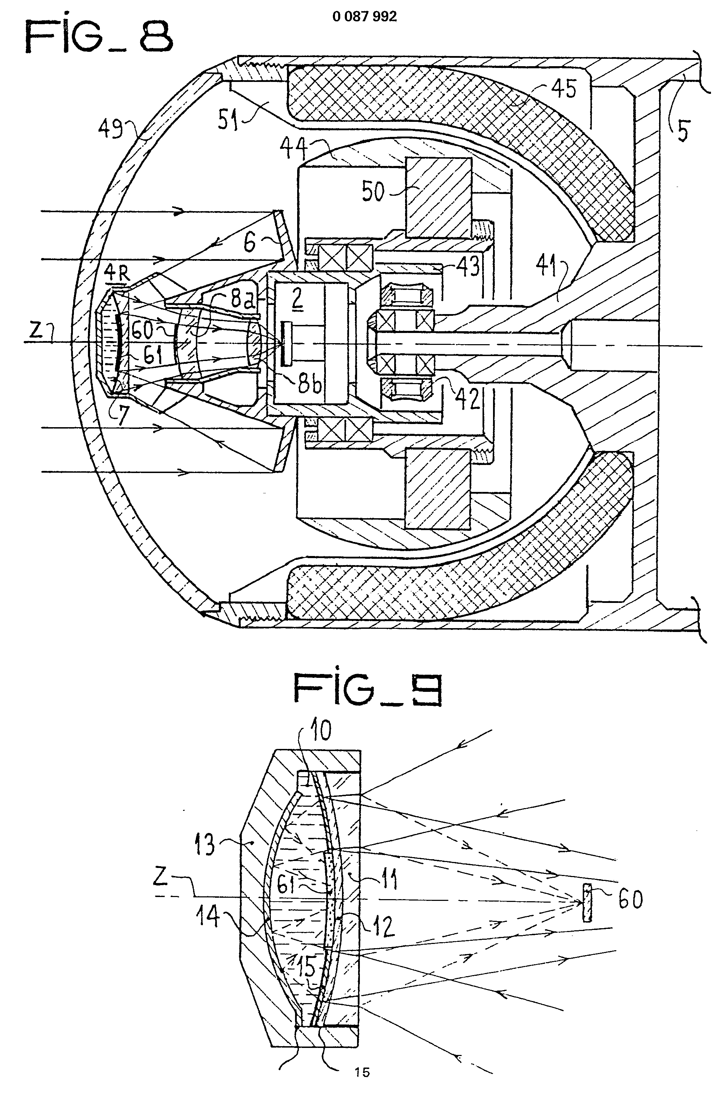

Le bloc 3 constitue la boucle d'asservissement du niveau vidéo (moyen ou crête) par contrôle de l'alimentation continue de la cellule à électrolyte 4. Le système optique de réception est de préférence un système catadioptrique du type Cassegrain déjà cité et qui peut être aménagé selon le schéma fig. 7 avec un atténuateur à transparence variable ou selon le schéma de la fig. 8 avec un atténuateur à réflexion variable.

Dans ces montages constituant des systèmes autodirecteurs de télévision à détecteur présentant une très grande sensibilité telle que des senseurs DTC, le gyroscope est représenté avec son axe Z coïncidant avec la position de référence ZO correspondant à l'axe longitudinal du missile, c'est-à-dire pour un angle de dépointage nul entre ces deux axes; l'axe Z précité se trouve perpendiculaire au plan de figure.

Sur la réalisation selon la fig. 7 l'optique Cassegrain comporte le miroir principal 6 et le miroir secondaire 7. Vient ensuite une optique correctrice 8 qui précède la cellule atténuatrice à transparence variable 4T elle-même placée en avant du détecteur 2. Le détecteur est refroidi. La toupie 44 comporte un aimant annulaire 50 qui subit les effets magnétiques engendrés par les bobines 45 dites de précession qui sont montées fixes sur un support mécanique 51 solidaire du corps 5 du missile. La toupie 44 est découplée du cadre 43 supportant l'ensemble optique, atténuateur et détecteur par des roulements à billes 52. Le miroir secondaire 7 est supporté par des bras 53 et un cache conique 54. Le découplage mécanique entre les éléments 41 et 42 s'effectue également avec des roulements à billes 55; il en est de même pour les découplages entre les éléments 42 et 43 mais dans ce dernier cas ils ne sont pas visibles sur la figure. L'arbre 41 est creux pour laisser le passage aux fils de connexion divers aboutissant d'une part, au détecteur et d'autre part, à la cellule 4T, ces fils étant connectés en aval vers les circuits électroniques correspondants. Ces connexions comportent notamment la sortie vidéo SV et l'alimentation de la cellule 4T à partir de la boucle 3; les autres connexions sont celles destinées à l'exploitation du signal vidéo SV et diverses connexions (alimentations continues, synchronisations) nécessaires au circuit solide détecteur 21.

Dans le montage autodirecteur télévision de la fig. 8 on retrouve la même structure à la différence près que la cellule est utilisée en atténuateur par réflexion 4R et que l'une de ses surfaces joue le rôle du miroir secondaire de l'optique Cassegrain. Un mode de réalisation de la cellule est représenté plus en détail sur la fig. 9 avec indication des rayons optiques pour faire comprendre son fonctionnement. Le rayonnement utile destiné au détecteur est représenté en trait plein, et le rayonnement non utile est en pointillé. La paroi transparente d'entrée 11 fait office de miroir secondaire sur sa surface interne lorsque cette face est rendue réfléchissante par le dépôt métallique 15. La lame 11 avec l'électrode transparente 12 et le dépôt métallique 15 constituent un miroir de Mangin, la face externe est plane et la face interne est courbe, en sorte que la réflexion sur le dépôt 15 renvoie du rayonnement vers l'axe Z. Il ne faut pas que la lumière réfléchie par la face externe vienne perturber le fonctionnement en formant une image parasite. Pour cela la lame d'entrée possède un certain nombre de caractéristiques. Sa face externe est traitée anti-reflets. Son épaisseur est déterminée suffisante pour que l'image parasite résiduelle soit focalisée le plus loin possible du plan focal utile. La forme du dioptre externe, un plan sur la figure, est telle que la première image parasite formée par réflexion sur le dioptre est à une distance finie dans une zone où il est possible de l'arrêter par un simple diaphragme. Cette dernière condition est réalisée aisément dans le cas de l'optique Cassegrain étant donné que le rayonnement utile réfléchi par les deux miroirs se trouve compris entre deux cônes centrés sur l'axe optique Z et que la partie interne du premier cône n'est pas utilisée pour le fonctionnement et peut donc comporter le diaphragme en question référencé 60. Ce diaphragme ne perturbe pas la transmission du rayonnement utile vers le détecteur. Il peut être obtenu comme représenté fig. 8 par un dépôt opaque au rayonnement prévu et qui est effectué sur un dioptre d'une première lentille correctrice 8a. Il y a lieu de considérer une autre source de rayonnement parasite, c'est le rayonnement qui traverse le dépôt métallique 15 et qui va être absorbé dans le fond de la cuve ou être réfléchi par la contre-électrode 14 en l'absence de dépôt absorbant: dans ce cas on a donné également une courbure à la surface de la paroi opaque 13 qui reçoit le dépôt 14, en sorte que la réflexion de ce rayonnement parasite transmis se produise vers l'axe Z et vienne aboutir au niveau de la lame d'entrée dans la zone non utile, dans cette zone on forme un dépôt absorbant 61 qui va constituer un diaphragme d'arrêt du rayonnement parasite réfléchi. Cette solution peut être jugée préférable à celle correspondant à la fig. 3 et utilisant une couche absorbante 16 étant donné que la couche absorbante risque de créer par diffusion un rayonnement diffusé perturbateur après nouvelle traversée de la cellule.

Il y a lieu de remarquer que le dispositif gyroscopique libre n'implique pas nécessairement une suspension avec la toupie extérieure, le montage avec la toupie intérieure est également envisageable.

Les avantages procurés par un appareil conforme à l'invention, notamment dans l'utilisation autodirecteur télévision sont essentiellement: une grande dynamique d'atténuation couvrant aisément la gamme 1 à 1000 pour l'ensemble atténuateur-détecteur; il n'y a pas de pièce mécanique en mouvement, les masses de métal déplacées étant très faibles (épaisseur du dépôt métallique de l'ordre de quelques centièmes d'Angström) ce qui ne risque pas de déséquilibrer le gyroscope; la vitesse de réponse atteint au moins celle des dispositifs mécaniques à diaphragme et est suffisante pour l'application autodirecteur, la réalisation s'effectue sous faible volume; le coût est faible ainsi que la consommation électrique.

Ainsi que l'on a pu s'en rendre compte de multiples variantes sont possibles répondant aux caractéristiques de l'invention dont la description qui précède a fait apparaître les avantages résultant de l'application à tout système comportant un photodétecteur à haute sensibilité et en particulier aux systèmes autodirecteurs télévision à détecteur solide DTC.

## Revendications

1. Appareil détecteur d'images vidéofréquence comportant une optique réceptrice (1) pour former l'image de la scène observée sur le plan photosensible d'un détecteur d'image (2), et des moyens d'atténuation optique variable à commande électronique (4) reliés par une boucle d'asservissement (3) à la sortie vidéo pour réguler le signal vidéo (SV) en fonction de l'éclairement de scène et accroître la dynamique de fonctionnement de l'appareil, caractérisé en ce que les moyens d'atténuation optique (4) sont formés par l'interposition sur le trajet optique d'au moins une cellule ayant un électrolyte (10) contenant des ions métalliques, l'électrolyte étant intercalé entre deux parois (11, 13) revêtues d'électrodes (12, 14) reliées à des moyens d'alimentation électrique pour produire par réaction électrochimique, le dépôt ou la dissolution selon le sens du courant d'alimentation, d'une couche métallique (15) dont les propriétés optiques de réflexion et de transmission varient en fonction de l'épaisseur du dépôt, ces propriétés optiques étant utilisées pour produire ladite atténuation variable, les moyens d'alimentation électrique étant constitués par la boucle d'asservissement (3), et en ce que l'optique réceptrice (1), les moyens d'atténuation optique (4) et le détecteur (2) sont supportés par un montage gyroscopique (41 à 45) pour stabiliser l'axe optique (Z) de réception.

2. Appareil selon la revendication 1, caractérisé en ce que l'optique réceptrice est du type Cassegrain formée d'un miroir principal (6) et d'un miroir secondaire (7), le miroir secondaire étant réalisé par une cellule à électrolyte utilisée en réflexion (4R).

3. Appareil selon la revendication 2, caractérisé en ce qu'il comporte en outre, une cellule (4T) formant atténuateur à transmission variable laquelle est disposée entre la cellule formant miroir secondaire (4R) et le dispositif détecteur (2).

4. Appareil selon l'une des revendications précédentes, caractérisé en ce que la boucle comporte un filtre (31) alimenté par la sortie vidéo (SV) de détection et connecté en série avec un circuit de traitement (32) dont la sortie est comparée à un seuil de référence (VS) dans un circuit comparateur (33), la sortie de comparaison (S2) étant appliquée à un réseau correcteur (34) pour compenser les non-linéarités de la cellule, puis amplifiée dans un circuit (35) pour constituer l'alimentation de la cellule, ledit circuit de traitement (32) étant un intégrateur associé à un filtre passe-bas (31) pour obtenir une régulation basée sur la valeur moyenne, et un détecteur crête associé à un filtre passe-bande (31) pour obtenir une régulation basée sur la valeur crête.

5. Appareil selon l'une des revendications précédentes, caractérisé en ce que les deux parois (11, 13) sont transparentes, l'électrode (14) associée à la paroi d'entrée étant de forme annulaire pour laisser passer le rayonnement, l'électrode (12) associée à la paroi de sortie étant transparente, de manière à utiliser la cellule comme atténuateur à transmission variable.

6. Appareil selon l'une des revendications 1 à 4, caractérisé en ce que l'une des parois, celle (11) qui reçoit le rayonnement incident est transparente ainsi que l'électrode (12) associée, la deuxième paroi (13) constituant le fond de la cuve étant opaque, la cellule étant utilisée comme atténuateur à réflexion variable.

7. Appareil selon l'une des revendications 1 à 4, caractérisé en ce que les deux parois (11, 13) sont transparentes, comportant chacune une électrode également transparente (12A, 12B) et que la cellule comporte dans le plan médian une troisième électrode (14) formant contre-électrode et de forme annulaire pour laisser passer le rayonnement et former un atténuateur à transmission variable.

8. Appareil selon l'ensemble des revendications 2 et 6, caractérisé en ce que la paroi d'entrée (11) est taillée avec un dioptre interne courbe pour former avec le dépôt métallique (15) un miroir de Mangin qui renvoie le faisceau vers le détecteur, la paroi de fond (13) étant également taillée courbe pour réfléchir vers l'axe (Z) le rayonnement parasite transmis à travers la cuve électronique, ledit dioptre courbe comportant dans sa partie centrale un dépôt absorbant (61) pour recevoir ledit rayonnement parasite et former un premier diaphragme d'arrêt (61), la cellule réfléchissante étant combinée avec un deuxième diaphragme d'arrêt (60) pour recevoir le rayonnement parasite produit, ledit deuxième diaphragme étant produit par dépôt axial sur un élément optique (8a) en aval de la cellule.

9. Appareil selon l'une des revendications 2 à 8, utilisé pour équiper un autodirecteur télévision.

**Patentansprüche**

1. Videofrequenz-Bilddetektorgerät mit einer Empfangsoptik (1) zur Erzeugung eines Bildes der beobachteten Szene in der photoempfindlichen Ebene eines Bilddetektors (2) und Mitteln (4) zur variablen, elektronisch steuerbaren optischen Dämpfung, welche über eine Regelschleife (3) mit dem Videoausgang verbunden sind, um das Videosignal (SV) in Abhängigkeit von der Szenenbeleuchtung zu regeln und die Arbeitsdynamik des Gerätes zu steigern, dadurch gekennzeichnet, dass die optischen Dämpfungsmittel (4) dadurch gebildet sind, dass auf dem optischen Weg wenigstens eine Zelle eingefügt ist, die einen Elektrolyt (10) aufweist, welcher Metallionen enthält, wobei der Elektrolyt zwischen zwei Wandungen (11, 13) eingefügt ist, die mit Elektroden (12, 14) beschichtet sind, welche an elektrische Versorgungsmittel angeschlossen sind, um durch elektrochemische Reaktion je nach Stromrichtung die Ablagerung oder Auflösung einer Metallschicht (15) hervorzurufen, deren optische Reflexions- und Transmissionseigenschaften in Abhängigkeit von der Dicke der Ablagerung variieren, wobei diese optischen Eigenschaften ausgenutzt werden, um die genannte variable Dämpfung zu erzeugen, wobei ferner die Mittel zur elektrischen Speisung durch die Regelschleife (3) gebildet sind, und dass die Empfangsoptik (1), die optischen Dämpfungsmittel (4) und der Detektor (2) durch eine Kreiselanordnung (41 bis 45) getragen werden, um die Empfangsachse (Z) zu stabilisieren.

2. Gerät nach Anspruch 1, dadurch gekennzeichnet, dass die Empfangsoptik vom Cassegrain-Typ ist und aus einem Hauptspiegel (6) und einem Hilfsspiegel (7) gebildet ist, wobei der Hilfsspiegel durch eine Elektrolyt-Zelle gebildet ist, welche im Reflexionsbetrieb (4R) arbeitet.

3. Gerät nach Anspruch 2, dadurch gekennzeichnet, dass es ferner eine Zelle (4T) enthält, welche ein Dämpfungselement mit variablem Durchlassvermögen bildet und zwischen der den Hilfsspiegel bildenden Zelle (4R) und der Detektorvorrichtung (2) angeordnet ist.

4. Gerät nach einem der vorstehenden Ansprüche, dadurch gekennzeichnet, dass die Schleife ein Filter (31) enthält, welches durch das Video-Detektionsausgangssignal (SV) gespeist wird und in Reihe mit einer Verarbeitungsschaltung (32) geschaltet ist, deren Ausgangssignal mit einem Referenzschwellwert (VS) in einer Komparatorschaltung (33) verglichen wird, wobei der Vergleicherausgang (S2) mit einem Korrektur-Netzwerk (34) verbunden ist, um die Nichtlinearitäten der Zelle zu kompensieren, mit anschliessender Verstärkung in einer Schaltung (35) zur Erzeugung des Speisesignals für die Zelle, wobei die Verarbeitungsschaltung (32) ein Integrator ist, welcher einem Tiefpassfilter (31) zugeordnet ist, um eine auf dem Mittelwert basierende Regelung zu erhalten, bzw. ein einem Bandpassfilter (31) zugeordneter Spitzenwertdetektor ist, um eine auf dem Spitzenwert basierende Regelung zu erhalten.

5. Gerät nach einem der vorstehenden Ansprüche, dadurch gekennzeichnet, dass die zwei Wandungen (11, 13) lichtdurchlässig sind und die der Eintrittswandung zugeordnete Elektrode (14) ringförmig ist, um die Strahlung durchzulassen, wobei die der Austrittswandung zugeordnete Elektrode (12) lichtdurchlässig ist, so dass die Zelle als Dämpfungselement mit variablem Transmissionsvermögen verwendet wird.

6. Gerät nach einem der Ansprüche 1 bis 4, dadurch gekennzeichnet, dass eine der Wandungen, nämlich diejenige (11), welche die ankommende Strahlung empfängt, ebenso wie die zugeordnete Elektrode (12) lichtdurchlässig ist, während die zweite Wandung (13), welche den Boden der Wanne bildet, lichtundurchlässig ist, wobei die Zelle als Dämpfungselement mit variablem Reflexionsvermögen verwendet wird.

7. Gerät nach einem der Ansprüche 1 bis 4, dadurch gekennzeichnet, dass die zwei Wandungen (11, 13) lichtdurchlässig sind und jeweils eine ebenfalls lichtdurchlässige Elektrode (12A, 12B) aufweisen, und dass die Zelle in der Mittelebene eine dritte Elektrode (14) aufweist, welche eine Gegenelektrode bildet und ringförmig ausgebildet ist, um die Strahlung durchzulassen und ein Dämpfungselement mit variablem Transmissionsvermögen zu bilden.

8. Gerät nach der Gesamtheit der Ansprüche 2 und 6, dadurch gekennzeichnet, dass die Eintrittswandung (11) mit einem inneren gekrümmten Diopter gestaltet ist, um mit der metallischen Ablagerung (15) einen Mangin-Spiegel zu bilden, welcher das Bündel zum Detektor umlenkt, wobei die Bodenwandung (13) ebenfalls gekrümmt gestaltet ist, um die von der elektronischen Wanne durchgelassene Störstrahlung zur Achse (Z) zu reflektieren, wobei der gekrümmte Diopter in seinem zentralen Teil eine absorbierende Ablagerung (61) aufweist, um die genannte Störstrahlung zu empfangen und eine erste Sperrblende (61) zu bilden, während die reflektierende Zelle mit einer zweiten Sperrblende (60) kombiniert ist, um die erzeugte Störstrahlung zu empfangen, wobei die genannte zweite Blende durch axiale Ablagerung auf einem optischen Element (8a) in Ausbreitungsrichtung hinter der Zelle gebildet ist.

9. Gerät nach einem der Ansprüche 2 bis 8, welches verwendet wird, um einen Fernseh-Zielsucher auszustatten.

## Claims

1. Videofrequency image detector apparatus comprising an optical receiver system (1) for forming an image of the observed scene in the photosensitive plane of an image detector (2), and electronically controlled variable optical attenuation means (4) connected to the video output through a control loop (3) for controlling the video signal (SV) in function of the scene illumination and for increasing the operating dynamic ratio of the apparatus, characterized in that the optical attenuation means (4) are formed by the interposition on the optical path of at least one cell having an electrolyte (10) containing metallic ions, the electrolyte being interposed between two walls (11, 13) coated with electrodes (12, 14) connected to electric feeding means for producing, by electro-chemical reaction, according to the direction of current flow the deposition or the dissolution of a metallic layer (15) the optical reflection and transmission properties of which vary in function of the thickness of the deposit, these optical properties being used to produce said variable attenuation, the electric feeding means being formed by the control loop (3), and in that the optical receiver system (1), the optical attenuation means (4) and the detector (2) are carried by a gyroscopic mount (41 to 45) to stabilize the optical receiving axis (Z).

2. Apparatus according to Claim 1, characterized in that the optical receiver system is of Cassegrain type formed of a main mirror (6) and of a secondary mirror (7), the secondary mirror being formed of an electrolyte cell used in the reflection mode (4R).

3. Apparatus according to Claim 2, characterized in that it further comprises a cell (4T) forming an attenuator with variable transmission which is arranged between the cell forming the secondary mirror (4R) and the detector device (2).

4. Apparatus according to any of the preceding claims, characterized in that the loop comprises a filter (31) fed by the video detection output (SV) and connected in series with a processing circuit (32) the output of which is compared to a reference threshold (VS) in a comparator circuit (33), the comparator output (S2) being applied to a correction network (34) to compensate for the non-linearities of the cell and subsequently amplified in a circuit (35) to form the feeding signal of the cell, said processing circuit (32) being an integrator associated to a low-pass filter (31) for obtaining a mean value-based control, and being a peak detector associated with a band-pass filter (31) for obtaining a peak-value based control.

5. Apparatus according to any of the preceding claims, characterized in that the two walls (11, 13) are transparent, the electrode (14) associated to the input wall being of annular shape to transmit the radiation, the electrode (12) associated with the output wall being transparent, in a manner to use the cell as an attenuator with variable transmission.

6. Apparatus according to any of Claims 1 to 4, characterized in that one of the walls, that (11) which receives the incident radiation, is transparent, just as the associated electrode (12), the second wall (13) forming the bottom of the trough being opaque, the cell being used as an attenuator with variable reflection.

7. Apparatus according to any of Claims 1 to 4, characterized in that the two walls (11, 13) are transparent, each of the walls comprising a likewise transparent electrode (12A, 12B), and in that the cell comprises a third electrode (14) in its center plane forming a counterelectrode of annular shape for the transmission of the radiation, in order to form an attenuator with variable transmission.

8. Apparatus according to the combined Claims 2 and 6, characterized in that the input wall (11) is shaped with an internal curved diopter to form with the metallic deposit (15) a mirror of Mangin type which reflects the beam towards the detector, the bottom wall (13) being likewise curved to reflect towards the axis (Z) the parasitic radiation transmitted through the electronic trough, said curved diopter comprising in its central portion an absorbing deposit (61) to receive said parasitic radiation and to form a first blocking diaphragm (61), the reflecting cell being combined with a second blocking diaphragm (60) for receiving the produced parasitic radiation, said second diaphragm being produced by an axial deposit on an optical element (8a) downstream of the cell.

9. Apparatus according to any of Claims 2 to 8, and used to equip a television homing system.

# FIG_1

AMP. 35

34 RESEAU CORRECTEUR

BOUCLE ASSERVISSEMENT 3

S2

COMP. 33

INTEGR. OU DET. CRÊTE 32

FILTRE 31

VS

# FIG_2

# FIG_3

# FIG_4

# FIG_6

# FIG_7

# FIG_5

FIG_8

0 087 992

FIG_9